# EUROPEAN PATENT APPLICATION

(11) **EP 2 262 172 A1**
(43) Date of publication of application: **15.12.2010**
(21) Application number: 09305528.3
(22) Date of filing: 10.06.2009
(51) Int. Cl.: H04L 12/26, H04L 12/24

(54) **Method and scout agent for building a source database**

(71) Applicant: Alcatel Lucent, 75008 Paris (FR)
(72) Inventor: Van Ewijk, Adrianus, 2180, Ekeren (Antwerpen) (BE); Davies, Paul, 2018, Antwerpen (BE); Sold, Haran, 2101ZL, Heemstede (NL)
(74) Representative: BiiP cvba

(57) **Abstract**

According to the invention, a scout agent (101, 201, 301) with network connectivity builds a source database (100) by:
- learning address information, port information and protocol information of certain traffic sources (206, 306);
- learning application traffic profile information of these traffic sources (206, 306); and
- instructing storage of the address information, port information, protocol information and application traffic profile information in a source database (100).

## Description

### Field of the Invention

The present invention generally relates to communication networks like for instance the Internet. The invention more particularly resolves the problem of identifying sources of traffic and creating awareness with network operators and service providers of the applications delivered over their networks by these traffic sources.

### Background of the Invention

Network operators and Internet Service Providers (ISPs) are facing an increasing need to monitor and control traffic and applications that are delivered over their networks by specific sources. Identification and a better understanding of the applications that cause traffic increases in the operator's network will enable the operator or ISP to negotiate and install source specific traffic policies in its network.

An existing tool for monitoring and controlling traffic is called Deep Packet Inspection (DPI) or Complete Packet Inspection, described for instance in Wikipedia at the following URL:
http://en.wikipedia.org/wiki/Deep_packet_inspection
DPI consists in creating a packet inspection point in the data path where packet inspection hardware can identify the type of traffic where a packet belongs to. Knowing the traffic category where a packet belongs to, for instance TCP (Transmission Control Protocol) or HTTP (Hypertext Transfer Protocol), does not enable to identify the source of the traffic, let aside the application that delivers the packet. Further, DPI devices are installed in the data path and therefore have to inspect and process the packets within very tight delay constraints, i.e. real-time processing at typical speeds of 10 to 40 Gbps (Gigabits per second) in today's networks. DPI devices hence require a high processing power and are therefore rather costly hardware solutions that do not meet the network operator's requirements in terms of identifying the sources and applications of traffic.

Known improvements of DPI consist in correlating the contents or behaviour of multiple packets in order to obtain more detailed information on the HTTP or TCP flows. By correlating certain re-directs, or by correlating the content of data packets with the URL that was used to retrieve an HTTP service or with the IP address and MAC address of the subscriber's residential gateway, more advanced DPI devices may be able to obtain or reconstruct more detailed information on the HTTP or TCP flows. However, such correlation techniques further increase the real-time processing requirements for DPI devices, making these devices even more complex and costly, and still do not enable to identify the exact source of traffic, the application that delivers the traffic, or the content of the traffic.

In summary, although DPI devices enable to categorize traffic in some categories, like HTTP, P2P, etc., they do not meet today's requirements for identifying traffic, sources, and applications, and they involve complex and costly hardware for real-time packet processing in the data path.

It is an objective of the present invention to provide a method and device that resolve the above mentioned drawbacks of existing traffic monitoring solutions. In particular, it is an objective to provide a method and device that enable to identify the source, application or content of traffic more detailed in order to enable network operators and ISPs to install and apply source specific policies in their networks.

### Summary of the Invention

According to the present invention, the above identified objectives are realized through a method for building a source database by a scout agent with network connectivity as defined by claim 1, the method comprising for a traffic source in the network the steps of:
- learning address information of the traffic source;
- learning port information of the traffic source;
- learning protocol information of the traffic source;
- learning application traffic profile information of the traffic source; and
- instructing storage of the address information, the port information, the protocol information and the application traffic profile information for the traffic source in a source database.

Thus, a scout agent, i.e. an application or set of software programs installed in a data centre with network connectivity, according to the invention populates and maintains a database of addresses, ports, protocols and application traffic profiles for every important traffic source, e.g. server, on the network. In case of the Internet, the address information corresponds to the IP address of the traffic source, the port information corresponds to the source port number, and the protocol information corresponds to TCP (Transmission Control Protocol) or UDP (User Datagram Protocol). The application traffic profile information contains all important cross-layer information of the IP traffic sources and must therefore at least identify the application(s) supported by the IP traffic source, the codecs used, and a description of the temporal properties of the sourced IP traffic such as the average bit rate, burst size, jitter, etc. The approach in accordance with the invention, based on a source database is fundamentally different from the DPI approach based on real-time packet inspection in the critical data path. In comparison with traditional DPI, the scout agent and the resulting source database according to the current invention provide increased specificity of the traffic sources and applications, and they need not be placed in the critical data path. As a consequence, its processing requirements and cost are substantially below that of traditional DPI devices, whereas its accurateness in identifying and characterizing traffic sources and applications is much better. An advantage thereof is that the source database built according to the present invention can be used to generate and apply traffic policing rules for individual traffic sources or traffic sources from a service provider.

As is indicated by claim 2, the application traffic profile information in the method according to the invention at least comprises:
- information indicative for an application supported by the traffic source,
- information indicative for a codec used to encode/decode content delivered by the traffic source; and
- information indicative for temporal properties of traffic delivered by the traffic source.

The information indicative for the supported application may for instance identify the type of application, e.g. video or audio, or may be more specific and identify for instance the exact video application like Hulu, Youtube, iTunes, Bittorent, etc. The information indicative for the codec used may for instance identify the encoding mechanism, like mp4, h264, etc. in case of video traffic, or mp3, wav, etc. in case of audio. The information indicative for temporal properties of the traffic can be extracted from the Quality of Service profile of the traffic source, and will typically contain parameters like the average video bit rate, the burst size, jitter, etc. It is noticed that the scout agent may deduce the Quality of Service profile of a traffic source by acting as a client application and monitoring the application behaviour in terms of its traffic properties.

Optionally, as defined by claim 3, the method according to the invention further comprises:
- learning application metadata in relation to the application supported by the traffic source and/or the content delivered by the traffic source; and
- instructing storage of the application metadata for the traffic source in the source database.

Thus, the scout agent may optionally also collect application metadata such as the name of the application or service, the company offering the service, the content delivery network, the domain offering the service, the URLs or links involved in delivering the service, the applications involved in delivering the service, the geographical location of the servers involved in delivering the service, the delivered content, the company that is the source of the content, etc. Thanks to such information, the source database will not only be useful for generating and installing traffic policy rules, but will also be useful to build and deliver detailed reports on the traffic from specific sources or applications, e.g. to the network operator or service providers.

As is indicated by claim 4, application metadata in the context of the current invention may comprise one or more of the following:
- a file name of a content item;
- an application name of the application supported by the traffic source;
- information indicative for a geographic location of a server delivering the content;
- information indicative for an owner or creator of the content; and
- information indicative for a content delivery network where over the traffic is delivered.

The application name may for instance be iTunes, Hulu, Youtube, iPlayer, a web browser name, etc. Information indicative for the geographic location may be the state(s) or province(s) wherein the IP addresses or range of IP addresses used by all servers involved in the delivery of the content are registered. Information indicative for the owner or creator could be the name of the company that is the source of the content, like for instance NBC, RTL, etc. The content delivery network may be identified by its domain name, for instance akamai.com, limilight.com, etc. The invention is obviously not limited to these examples of application metadata.

Optionally, as defined by claim 5, the steps of learning and storing may be triggered manually, based on user instruction.

Indeed, in order to instruct the scout agent what traffic sources to contact and build profiles of in the source database, the scout agent may be configured manually with the addresses of important content sources, e.g. popular video websites.

Alternatively, as defined by claim 6, the steps of learning and storing may be triggered automatically, based on instruction of the traffic source.

As an alternative to manual configuration, the scout agent may receive automated instructions identifying important content sources. These automated instructions may be received from flow monitoring processes that run in the network and discover what addresses of services are popular, as is indicated by claim 7.

Also optionally, as defined by claim 8, the steps of learning and storing for the traffic source may be repeated event driven.

Thus, updates of the source database may be triggered by events.

Alternatively, as defined by claim 9, the steps of learning and storing for the traffic source may be repeated periodically.

Hence, as an alternative to event-based updates of the source database, the content of the database may be updated at a regular pace or frequency.

In addition to a method for building a source database as defined by claim 1, the current invention also applies to a scout agent for building a source database as defined by claim 10, the scout agent having means for network connectivity and further comprising:
- means for learning address information of a traffic source;
- means for learning port information of the traffic source;
- means for learning protocol information of the traffic source;
- means for learning application traffic profile information of the traffic source; and
- means for instructing storage of the address information, the port information, the protocol information and the application traffic profile information for the traffic source in the source database.

The scout agent typically will be an application or set of software programs installed in a data centre with network connectivity, either centralized or distributed, either fixed or mobile. The scout agent is manually configured to contact traffic sources, receives instructions from a flow monitoring process running in the network to contact certain popular traffic sources, or spiders across websites to detect and identify popular sources of for instance video and audio traffic. The scout agent further uses a scripted application to contact the traffic sources and collect the source information (address, ports and protocols) and application meta-information.

Further, the present invention also relates to the resulting source database as defined by claim 11, adapted to store upon instruction of a scout agent with network connectivity for a traffic source in a network:
- address information of a traffic source;
- port information of the traffic source;
- protocol information of the traffic source; and
- application traffic profile information of the traffic source.

### Brief Description of the Drawings

Fig. 1 illustrates a first embodiment of the method for building an IP source database according to the present invention;

Fig. 2 illustrates a first example scenario wherein the method, scout agent and source database according to the present invention are used; and

Fig. 3 illustrates a second example scenario wherein the method, scout agent and source database according to the present invention are used.

### Detailed Description of Embodiment(s)

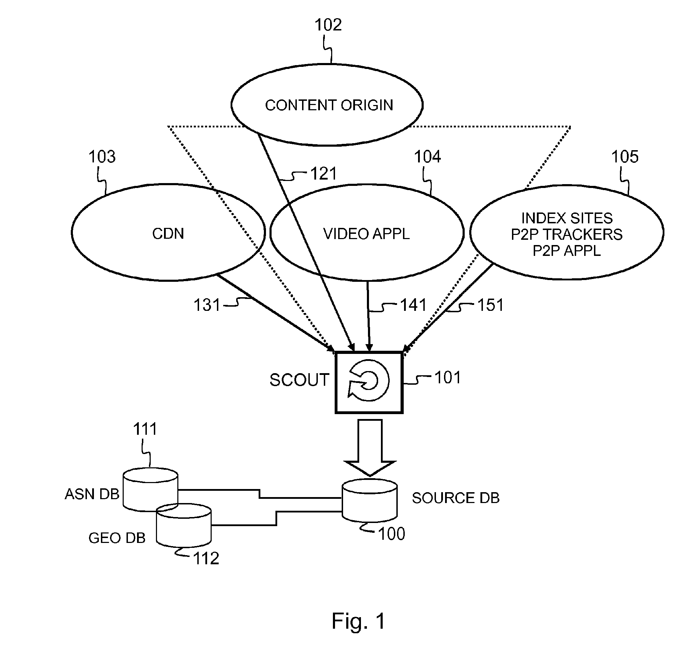

Fig. 1 shows a scout agent, 101 or SCOUT, i.e. a set of programs that builds a database, 100 or SOURCE DB, of IP addresses and ports of every important computer or server on the Internet and of the applications that are delivered from these IP addresses. This database 100 is called the IP source database.

The information that the scout agent 101 collects, includes all the detailed information that is available to an application user. In other words, it contains all important cross-layer information of IP sources and applications, including besides network address and protocol information, also the application traffic profiles, information on the content delivered via the applications, and information on the companies that are involved with the full delivery chain of the application.

In more detail, the scout agent 101 learns the network information like IP addresses, ports and protocol information (UDP/TCP) of important applications sources like 104 or VIDEO APPL, content delivery networks like 103 or CDN, and servers or content sources. The IP addresses of the latter servers or content servers may for instance be learned from index sites (INDEX SITES), peer-to-peer trackers (P2P TRACKERS) and peer-to-peer applications (P2P APPL) 105 as is indicated by arrow 151 in Fig. 1. These IP addresses are stored in the IP source database 100. The scout agent 101 in addition also collects information about the applications that are delivered from these IP addresses as is indicated by arrow 141 in Fig. 1, about the type of traffic these applications deliver (e.g. streaming video or peer-to-peer video), about the delivered content, about the companies that are the source of the content as is indicated by arrow 121 in Fig. 1, and about the content delivery network, 103 or CDN, as is indicated by arrow 131 in Fig. 1. The information stored in the source database 100 may further be supplemented with information on the domain and the geographic location of the server(s) that deliver the content. This information could for instance be extracted from an ASN (Autonomous System Number) database, 111 or ASN DB, and/or from geographic databases, 112 or GEO DB.

The scout agent 101 collects IP source information and application meta-information. The scout agent 101 is an application or set of software programs running in a data center with Internet connectivity. The scout agent 101 can be mobile or fixed, can be centralized or distributed over different geographical locations in the Internet, and may be event-driven or periodically triggered.

There are two processes that instruct the scout agent 101 what IP sources to contact and build application traffic profiles of: a manual process and an automated process. In the manual process, a user instructs or configures the scout agent 101 to contact certain popular video websites and content sources. In the automated process, the scout agent 101 receives automated instructions of important IP sources from a monitoring process that runs in the network and logs IP flow information, like for instance NetFlow, sFIow, IPFIX or cflowd. This monitoring process will discover what IP addresses of services are popular in the network. The scout agent 101 thereupon will translate the IP flow information into application level contact information (e.g. a web URL) of the service that was the source of the IP flow, using an Autonomous System Number database like 111 or ASN DB, i.e. a database that contains a mapping between IP address ranges, autonomous systems and organizations. The scout agent 101 further uses a scaled-down web-browser client to contact the application or service, and a scripted application client to contact services, for instance using a modified version of iTunes, iPlayer, etc. The scout agent 101 thus spiders across websites and servers to find out about links to videos.

As a result, the IP source database 100 shall contain all relevant cross-layer information about IP sources. For video sources, the IP source data in source database 100 may for instance be organized and associated as follows:
- the service name (e.g. Hulu);
- the company offering the service (e.g. Google.com);
- the content delivery network (e.g. Akamai.com);
- the domain offering the service (e.g. youtube.com);
- the domain delivering the content (e.g. Akamai.com);
- the links or URLs involved in the video service;
- the applications involved in delivering the service (e.g. iTunes, iPlayer, etc.);
- the signaling addresses (e.g. URI);
- the IP addresses;
- the protocols (e.g. http), and traffic delivered from specific URL;
- the in-between re-directs' IP addresses, port numbers, protocols;
- the server IP 5-tuple (IP source address, IP destination address, IP source port, IP destination port, protocol) that is delivering the actual video stream;
- the protocol delivering the video (e.g. http, RTMP, UDP, etc.);
- the streaming encoding (e.g. H.264, Flash); and
- the video bit rate.
   Additionally, metadata concerning the content can be added to the IP source database 100. The scout agent 101 may derive these metadata from the source website and/or servers.

Although the embodiment focuses on video services, it will be appreciated by any person skilled in the art that similar type of information can be collected for any other type of service.

The IP source database 100 can be used to generate network management signals (e.g. SNMP traps) based on application traffic, route or police traffic based on policy rules derived from the IP source database 100, and correlate network flow information with the IP source database 100 to build detailed reports for operators or ISPs. Usage of the IP source database for these purposes is described in detail in a counterpart patent application of the same applicant entitled "Network Management Method and Agent" that is incorporated herein by reference.

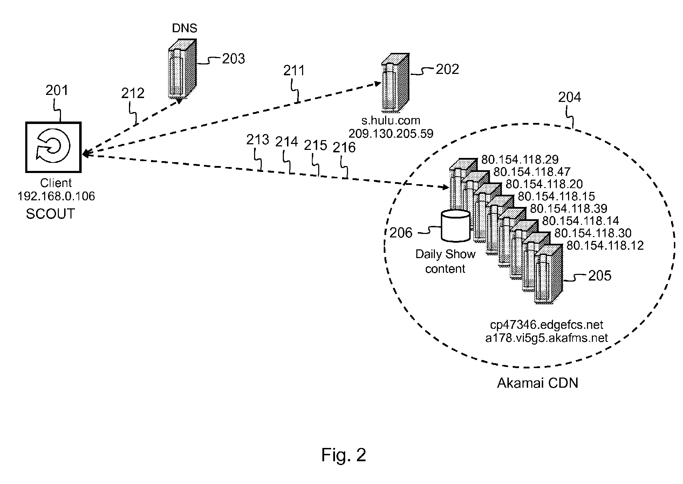

Fig. 2 illustrates a first example scenario where an embodiment of the scout agent 201 according to the present invention learns information on the Hulu service for storage in a source database.

As will be explained in the following paragraph, the scout agent 201 contacts the Hulu server 202 (s.hulu.com) and logs all redirects that lead to the actual video server (80.154.118.29) that delivers the video stream. In other words: the scout agent 201 learns that a service is associated to a link (or URL) that leads to a video server 5-tuple (IP source address, IP destination address, IP source port, IP destination port, protocol). The scout agent 201 upfront finds out that some links on the Hulu website lead to video clips by monitoring incoming packets and traffic, by manual instruction or via an automated process. Such automated process will detect that a link on a page is using semantics that indicate a video, e.g. file type in the link or any other tag in the links. The scout agent 201 discovers that an incoming stream is video for instance by recognizing the encoding of the data.

As is indicated by arrow 211, the scout agent 201 with IP address 192.168.0.106 acts as a client and requests content info for the Daily Show episode from the Hulu server 202, s.hulu.com whose IP address 209.130.205.59 was learned through monitoring packets conveying video traffic or alternatively was configured manually. The Hulu server 202 knows only the URL of the Akamai CDN element 206 holding the requested content item, i.e. "cp47346.edgefcs.net". Subsequently, the scout agent 201 needs to resolve this URL to an IP destination address. The scout agent 201 thereupon contacts the Domain Name Server or DNS 203 to resolve the URL "cp47346.edgefcs.net" of the Akamai CDN element 206. This is indicated by arrow 212 in Fig. 2. the DNS 203 returns eight IP addresses of eight servers 205 in the Akamai content delivery network 204. These eight IP addresses are listed in Fig. 2: 80.154.118.29; 80.154.118.47; 80.154.118.20; 80.154.118.15; 80.154.118.39; 80.154.118.14; 80.154.118.30; and 80.154.118.12. The scout agent 201 chooses one of the eight received IP addresses, e.g. 80.154.118.29, and requests access as is indicated by arrow 213 in Fig. 2. The scout agent 201 gets the streaming server ID as is indicated by arrow 214 and interacts with the streaming server using RTMP (Routing Table Maintenance Protocol) as is indicated by arrow 215. Thereupon, the requested video is streamed from the server with IP address 80.154.118.29 which leads to the video server 5-tuple (IP source address, IP destination address, IP source port, IP destination port, protocol) an the application traffic profile that will be stored by scout agent 201 in an IP source database, not shown in Fig. 2. It is noticed that the video stream will typically provide the server IP address, port and protocol information, whereas the other elements of the 5-tuple (source IP address and port) may be wildcarded.

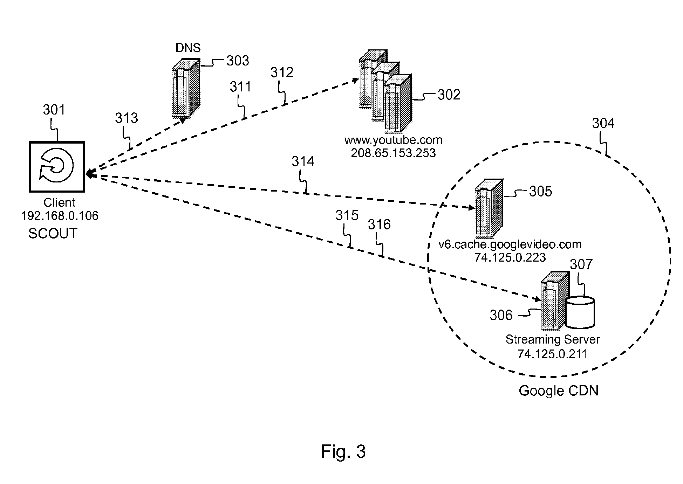

Fig. 3 illustrates a second example scenario where an embodiment of the scout agent 301 according to the present invention learns information on the YouTube service for storage in a source database.

Just like with Hulu, the scout agent 301 learns that requests from a certain geo-location to a certain youtube videoclip will lead to the IP 5-tuple of a Google CDN video server. The scout agent 301 updates the IP source database continuously. This means that the scout agent continuously finds out about changes in the IP 5-tuple information and in the services that are delivered from these IP traffic sources.

Initially, the scout agent 301 with IP address 192.168.0.106 contacts the YouTube server 302 with IP address 208.65.153.253 and requests content info for the Daily Show episode. This is indicated by arrow 311 in Fig. 3. The YouTube server 302 knows only the URL "v6.cache.googlevideo.com" of the Google CDN element 305 responsible for the content and returns this information as indicated by arrow 312 in Fig. 3. Subsequently, the scout agent 302 needs to resolve this URL to an IP destination address. As is indicated by arrow 313 in Fig. 3, the scout agent 302 thereupon contacts the DNS server 303 with a request to resolve the URL "v6.cache.googlevideo.com", and in response from the DNS server 303 receives the IP address 74.125.0.223 of server 305 in the Google content delivery network 304. The DNS 303 load balances for YouTube.com, so the IP address returned by the DNS server may vary for multiple playbacks of the same content. In the next step, the scout agent 301 contacts the server 305 to get the video from cache memory. This is indicated by arrow 314 in Fig. 3. The server 305 however redirects the video delivery to a streaming server 306 with IP address 74.125.0.211 as a result of which the scout agent 301 contacts server 306 to get the video from cache memory 307 in or near the server 306 pointed to in the previous step. The scout agent 301 interacts with the streaming server 306 using HTTP (Hypertext Transfer Protocol) as is indicated by arrow 315. At last, as is indicated by arrow 316 in Fig. 3, the video is streamed from the streaming server 306 with IP address 74.125.0.211 to scout agent 301 which leads to the video server 5-tuple (IP source address, IP destination address, IP source port, IP destination port, protocol) and the application traffic profile that will be stored by scout agent 301 in an IP source database, not shown in Fig. 3.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for building a source database (100) by a scout agent (101, 201, 301) with network connectivity, said method comprising for a traffic source (206, 306) in said network the steps of:
- learning address information of said traffic source (206, 306);
- learning port information of said traffic source (206, 306);
- learning protocol information of said traffic source (206, 306);
- learning application traffic profile information of said traffic source (206, 306); and
- instructing storage of said address information, said port information, said protocol information and said application traffic profile information for said traffic source (206, 306) in said source database (100).

2. A method for building a source database (100) according to claim 1, wherein said application traffic profile information comprises:
- information indicative for an application supported by said traffic source (206, 306);
- information indicative for a codec used to encode/decode content delivered by said traffic source (206, 306); and
- information indicative for temporal properties of traffic delivered by said traffic source (206, 306).

3. A method for building a source database (100) according to claim 2, said method further comprising for said traffic source (206, 306):
- learning application metadata in relation to said application supported by said traffic source (206, 306) and/or said content delivered by said traffic source (206, 306); and
- storing said application metadata for said traffic source (206, 306) in said source database (100).

4. A method for building a source database (100) according to claim 3, wherein said application metadata comprises one or more of the following:
- a file name of a content item;
- an application name of said application (104) supported by said traffic source (206, 306);
- information indicative for a geographic location of a server delivering said content;
- information indicative for an owner or creator of said content (102); and
- information indicative for a content delivery network (103) where over said traffic is delivered.

5. A method for building a source database (100) according to claim 1, wherein said steps of learning and storing are triggered manually, based on user instruction.

6. A method for building a source database (100) according to claim 1, wherein said steps of learning and storing are triggered automatically, based on instruction of said traffic source (206, 306).

7. A method for building a source database (100) according to claim 1, wherein said steps of learning and storing are triggered automatically, based on instructions received from flow monitoring processes that run in said network to discover addresses of popular services.

8. A method for building a source database (100) according to claim 1, wherein said steps of learning and storing for said traffic source (206, 306) are repeated event driven.

9. A method for building a source database (100) according to claim 1, wherein said steps of learning and storing for said traffic source (206, 306) are repeated periodically.

10. A scout agent (101, 201, 301)) for building a source database (100), said scout agent (101, 201, 301) having means for network connectivity and further comprising:
- means for learning address information of a traffic source (206, 306);
- means for learning port information of said traffic source (206, 306);
- means for learning protocol information of said traffic source (206, 306);
- means for learning application traffic profile information of said traffic source (206, 306); and
- means for instructing storage of said address information, said port information, said protocol information and said application traffic profile information for said traffic source (206, 306) in said source database (100).

11. Source database (100), adapted to store upon instruction of a scout agent (101, 201, 301) with network connectivity for a traffic source (206, 306) in a network:
- address information of said traffic source (206, 306);
- port information of said traffic source (206, 306);
- protocol information of said traffic source (206, 306); and
- application traffic profile information of said traffic source (206, 306).
